(19) Europäisches Patentamt / European Patent Office / Office européen des brevets

(11) **EP 3 276 738 A1**

(12) **EUROPEAN PATENT APPLICATION**
published in accordance with Art. 153(4) EPC

(43) Date of publication:
**31.01.2018 Bulletin 2018/05**

(51) Int Cl.:
**H01M 10/48** (2006.01)  **B60L 11/18** (2006.01)
**E02F 9/20** (2006.01)  **H01M 10/44** (2006.01)

(21) Application number: **16817618.8**

(22) Date of filing: **01.06.2016**

(86) International application number:
**PCT/JP2016/066134**

(87) International publication number:
**WO 2017/002509 (05.01.2017 Gazette 2017/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **29.06.2015 JP 2015129870**

(71) Applicant: **KYB Corporation
Tokyo 105-6111 (JP)**

(72) Inventors:
• **EGAWA, Masahiro**
  **Tokyo 105-6111 (JP)**
• **KAWASAKI, Haruhiko**
  **Atsugi-shi**
  **Kanagawa 243-0812 (JP)**

(74) Representative: **Grünecker Patent- und
Rechtsanwälte
PartG mbB
Leopoldstraße 4
80802 München (DE)**

(54) **CONTROL SYSTEM AND CONTROL METHOD FOR HYBRID CONSTRUCTION MACHINE**

(57) A control system (100) for a hybrid construction machine, includes: a fluid pressure pump (71, 72); a regeneration motor (88) rotationally driven by refluxed working fluid; a rotating electric machine (91) rotationally driven by the regeneration motor (88); an energy storage part (26) into which regenerated electric power is charged; and a temperature detecting part (26a) adapted to detect a temperature of the energy storage part (26), a control part (90) charging with regenerated electric power when a temperature of the storage part (26) becomes below a first set temperature, until achieving a voltage higher than a charge termination voltage of when the temperature of the storage part (26) is equal to or more than the first set temperature by an amount of internal resistance according to the temperature of the storage part (26).

*FIG. 1*

EP 3 276 738 A1

## Description

TECHNICAL FIELD

The present invention relates to a control system and a control method for a hybrid construction machine.

BACKGROUND ART

JP2011-241539A discloses a hybrid construction machine in which an electric motor to be driven by electric power of a battery and an engine are used in combination as a power source. In this hybrid construction machine, a regeneration motor is rotatably driven by working oil refluxed from an actuator, and regenerated electric power generated by a power generator provided coaxially to the regeneration motor is charged into a battery.

SUMMARY OF INVENTION

Batteries such as a lithium-ion rechargeable battery and a nickel-hydrogen rechargeable battery have increased internal resistance in a state in which their temperatures are lower than an appropriate range. In the hybrid construction machine of JP2011-241539A, regenerated electric power of the regeneration motor is reduced as the temperature of the battery decreases, and when the temperature becomes lower than a predetermined temperature, the machine stops the regeneration.

An object of the present invention is to enable charging of regenerated electric power to an energy storage part even in a state in which a temperature of an energy storage part is low.

According to an aspect of the present invention, a control system for a hybrid construction machine, includes: a fluid pressure pump configured to supply a working fluid to a fluid pressure actuator; a regeneration motor rotationally driven by working fluid discharged and refluxed from the fluid pressure pump; a rotating electric machine rotationally driven by the regeneration motor; an energy storage part configured to store regenerated electric power generated by the rotating electric machine; a temperature detecting part configured to detect a temperature of the energy storage part; and a control part configured to control charging of regenerated electric power to the energy storage part, when a temperature of the energy storage part is below a first set temperature, the control part charging with the regenerated electric power until achieving a voltage higher than a charge termination voltage of when the temperature of the energy storage part is equal to or more than the first set temperature by an amount of internal resistance in accordance with the temperature of the energy storage part.

According to another aspect of the present invention, a control method for controlling a hybrid construction machine comprising a regeneration motor rotationally driven by working fluid discharged and refluxed from a fluid pressure pump, a rotating electric machine rotationally driven by the regeneration motor, and an energy storage part configured to be charged with regenerated electric power generated by the rotating electric machine, the method includes: detecting a temperature of the energy storage part; and charging with regenerated electric power when the temperature of the energy storage part becomes below a first set temperature, until achieving a voltage higher than a charge termination voltage of when the temperature of the energy storage part is equal to or more than the first set temperature by an amount of internal resistance in accordance with the temperature of the energy storage part.

BRIEF DESCRIPTION OF DRAWINGS

[Fig. 1] Fig. 1 is a circuit diagram showing a control system for a hybrid construction machine according to an embodiment of the present invention.
[Fig. 2] Fig. 2 is a flow chart of an excess flow rate regeneration control in a control system for a hybrid construction machine.
[Fig. 3] Fig. 3 is a map showing charge termination voltages with respect to temperatures of an energy storage part.
[Fig. 4] Fig. 4 is a map showing torque command values of a rotating electric machine with respect to voltages while charging an energy storage part.
[Fig. 5] Fig. 5 is a modification of a map showing torque command values of a rotating electric machine with respect to voltages while charging an energy storage part.
[Fig. 6] Fig. 6 is a map showing torque command values of a rotating electric machine with respect to temperatures of an energy storage part.

DESCRIPTION OF EMBODIMENTS

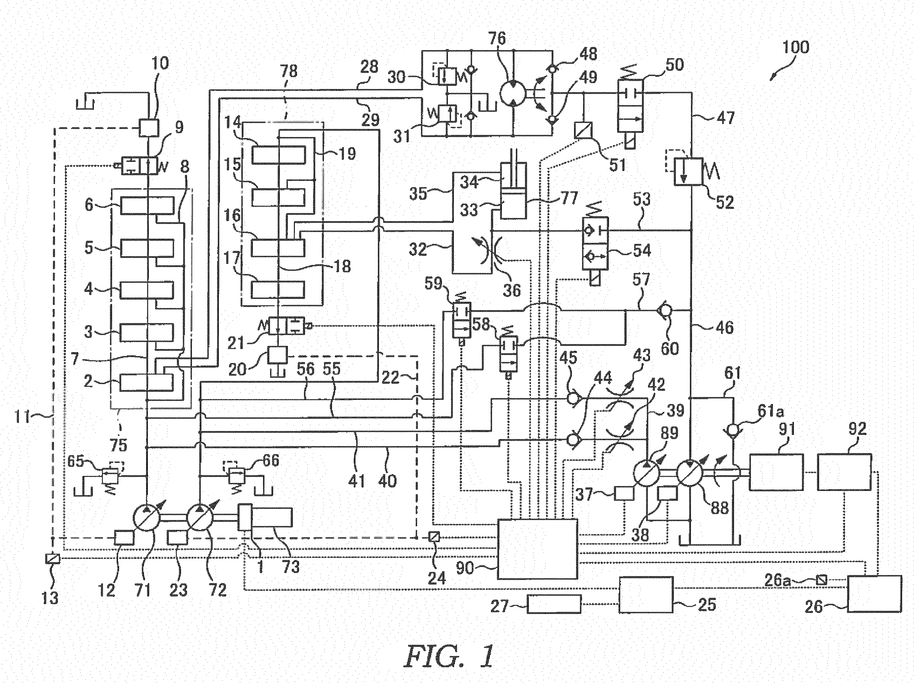

Hereinafter, an embodiment of the present invention will be described with reference to the drawings.
First, with reference to Fig. 1, an overall configuration of a control system 100 for a hybrid construction machine according to an embodiment of the present invention will be described. In the present embodiment, a case where the hybrid construction machine is a hydraulic excavator will be described. In the hydraulic excavator, working oil is used as working fluid.
The hydraulic excavator includes first and second main pumps 71 and 72 serving as fluid pressure pumps. Each of the first and second main pumps 71 and 72 is a variable capacity type pump in which a tilting angle of a swash plate can be adjusted. The first and second main pumps 71 and 72 are driven by an engine 73 and coaxially rotated.
A power generator 1 configured to generate electric power by utilizing remaining power of the engine 73 is provided in the engine 73. The electric power generated by the power generator 1 is charged into a battery 26 serving as an energy storage part, via a battery charger 25. The battery charger 25 can charge the electric power into the battery 26 even in a case where the battery charger is connected to a normal household power source 27.

In the battery 26, a temperature sensor 26a serving as a temperature detecting part configured to detect a temperature of the battery 26, and a voltage sensor (not shown) serving as a voltage detecting part configured to detect voltage of the battery 26 are provided. The temperature sensor 26a outputs an electric signal in accordance with a detected temperature of the battery 26 to a controller 90 serving as a control part.

Working oil discharged from the first main pump 71 is supplied to a first circuit system 75. The first circuit system 75 has, in order from the upstream side, an operation valve 2 adapted to control a swing motor 76, an operation valve 3 adapted to control an arm cylinder (not shown), an operation valve 4 for boom second gear adapted to control a boom cylinder 77, an operation valve 5 adapted to control an auxiliary attachment (not shown), and an operation valve 6 adapted to control a left-hand side first traveling motor (not shown). The swing motor 76, the arm cylinder, the boom cylinder 77, a hydraulic device connected to the auxiliary attachment, and the first traveling motor, correspond to fluid pressure actuators (hereinafter, simply referred to as "actuators").

The operation valves 2 to 6 control flow rates of discharged oil supplied from the first main pump 71 to the actuators, and control actions of the actuators. The operation valves 2 to 6 are operated by pilot pressure supplied in accordance with an operator of the hydraulic excavator manually operating an operation lever.

The operation valves 2 to 6 are connected to the first main pump 71 through a neutral flow passage 7 and a parallel flow passage 8 that are parallel to each other. On an upstream side of the operation valve 2 in the neutral flow passage 7, a main relief valve 65 is provided, which main relief valve is adapted to open when working oil pressure of the neutral flow passage 7 exceeds a predetermined main relief pressure and maintains the working oil pressure equal to or below a main relief pressure.

On a downstream side of the operation valve 6 in the neutral flow passage 7, an on/off valve 9 is provided, which on/off valve has a solenoid to be connected to the controller 90, and which can block the working oil of the neutral flow passage 7. The on/off valve 9 is maintained at a full open position in a normal state. The on/off valve 9 is switched to a closed state by a command from the controller 90.

On the downstream side of the on/off valve 9 in the neutral flow passage 7, a pilot pressure generation mechanism 10 for generating pilot pressure is provided. The pilot pressure generation mechanism 10 generates high pilot pressure when a flow rate of a passing working oil is high, and generates low pilot pressure when the flow rate of the passing working oil is low.

In a case where all the operation valves 2 to 6 are placed at neutral positions or in the vicinity of the neutral positions, the neutral flow passage 7 guides all or part of the working oil discharged from the first main pump 71 to a tank. In this case, since the flow rate of the working oil passing through the pilot pressure generation mechanism 10 is increased, high pilot pressure is generated.

Meanwhile, when the operation valves 2 to 6 are switched to a full stroke state, the neutral flow passage 7 is closed and no working oil is distributed. In this case, the flow rate of the working oil passing through the pilot pressure generation mechanism 10 is almost eliminated, and the pilot pressure is maintained to be zero. However, depending on operated amounts of the operation valves 2 to 6, part of the working oil discharged from the first main pump 71 will be guided to the actuators, and remaining working oil will be guided to the tank from the neutral flow passage 7. Therefore, the pilot pressure generation mechanism 10 generates the pilot pressure in accordance with a flow rate of the working oil of the neutral flow passage 7. Namely, the pilot pressure generation mechanism 10 generates the pilot pressure in accordance with the operated amounts of the operation valves 2 to 6.

A pilot flow passage 11 is connected to the pilot pressure generation mechanism 10. The pilot pressure generated in the pilot pressure generation mechanism 10 is guided to the pilot flow passage 11. The pilot pressure generation mechanism 10 is connected to a regulator 12 adapted to control a discharge capacity (tilting angle of a swash plate) of the first main pump 71.

The regulator 12 controls the tilting angle of the swash plate of the first main pump 71 in proportion to the pilot pressure of the pilot flow passage 11 (a proportional constant takes a negative number). Thereby, the regulator 12 controls displacement per rotation of the first main pump 71. Namely, the discharging amount of the first main pump 71 changes in accordance with the pilot pressure of the pilot flow passage 11. When the operation valves 2 to 6 are switched to full stroke and a flow of the neutral flow passage 7 is eliminated, and the pilot pressure of the pilot flow passage 11 becomes zero, the tilting angle of the first main pump 71 is maximized. At this time, the displacement per rotation of the first main pump 71 is maximized.

A first pressure sensor 13 adapted to detect the pressure of the pilot flow passage 11 is provided in the pilot flow passage 11. A pressure signal detected by the first pressure sensor 13 is outputted to the controller 90.

The working oil discharged from the second main pump 72 is supplied to a second circuit system 78. The second circuit system 78 has, in order from the upstream side, an operation valve 14 adapted to control a right-hand side second traveling motor (not shown), an operation valve 15 adapted to control a bucket cylinder (not shown), an operation valve 16 adapted to control a boom cylinder 77, and an operation valve 17 for arm second gear adapted to control the arm cylinder (not shown). The second traveling motor, the bucket cylinder, the boom cylinder 77, and the arm cylinder, correspond to fluid pressure actuators (hereinafter, simply referred to as the "actuators").

The operation valves 14 to 17 control flow rates of discharged oil supplied from the second main pump 72 to the actuators, and control actions of the actuators. The operation valves 14 to 17 are operated by pilot pressure supplied in accordance with an operator of the hydraulic excavator manually operating an operation lever.

The operation valves 14 to 17 are connected to the second main pump 72 through a neutral flow passage 18 and a parallel flow passage 19 that are parallel to each other. On an upstream side of the operation valve 14 in the neutral flow passage 18, a main relief valve 66 is provided, which main relief valve is adapted to open when working oil pressure of the neutral flow passage 18 exceeds a predetermined main relief pressure, and maintains the working oil pressure equal to or below a main relief pressure.

The main relief valves 65 and 66 are provided in at least one of the first circuit system 75 and the second circuit system 78. In a case where the main relief valve is provided in just one of the first circuit system 75 and the second circuit system 78, connection is established so that working oil is guided to the same main relief valve from the other one of the first circuit system 75 and second circuit system 78. As such, when a single main relief valve is provided, the main relief valve will be shared between the first circuit system 75 and the second circuit system 78.

On the downstream side of the operation valve 17 in the neutral flow passage 18, an on/off valve 21 is provided, which on/off valve has a solenoid to be connected to the controller 90, and which can block the working oil of the neutral flow passage 18. The on/off valve 21 is kept at a full open position in a normal state. The on/off valve 21 is switched to a closed state by a command from the controller 90.

On the downstream side of the operation valve 21 in the neutral flow passage 18, a pilot pressure generation mechanism 20 for generating pilot pressure is provided. The pilot pressure generation mechanism 20 has the same function as the pilot pressure generation mechanism 10 on the side of the first main pump 71.

A pilot flow passage 22 is connected to the pilot pressure generation mechanism 20. The pilot pressure generated in the pilot pressure generation mechanism 20 is guided to the pilot flow passage 22. The pilot flow passage 22 is connected to a regulator 23 adapted to control a discharge capacity (tilting angle of the swash plate) of the second main pump 72.

The regulator 23 controls the tilting angle of the swash plate of the second main pump 72 in proportion to the pilot pressure of the pilot flow passage 22 (a proportional constant takes a negative number). Thereby, the regulator 23 controls a displacement per rotation of the second main pump 72. Namely, the discharging amount of the second main pump can change in accordance with the pilot pressure of the pilot flow passage 22. When the operation valves 14 to 17 are switched to full stroke and a flow of the neutral flow passage 18 is eliminated, and the pilot pressure of the pilot flow passage 22 becomes zero, the tilting angle of the second main pump 72 is maximized. At this time, the displacement per rotation of the second main pump 72 is maximized.

A second pressure sensor 24 adapted to detect the pressure of the pilot flow passage 22 is provided in the pilot flow passage 22. A pressure signal detected by the second pressure sensor 24 is outputted to the controller 90.

Next, the swing motor 76 will be described.

Connected to an actuator port of the operation valve 2 are flow passages 28 and 29 that communicate with the swing motor 76. Relief valves 30 and 31 are connected to the flow passages 28 and 29, respectively. When the operation valve 2 is maintained in the neutral position, the actuator port is closed, and the swing motor 76 maintains a stopped state.

When the operation valve 2 is switched to one side from the neutral position in a state in which the swing motor 76 is stopped, the flow passage 28 becomes connected to the first main pump 71, and the flow passage 29 communicates with the tank. As a result, working oil is supplied from the flow passage 28 and the swing motor 76 rotates in one direction, and also return oil from the swing motor 76 returns to the tank through the flow passage 29. When the operation valve 2 is switched to the other side, the flow passage 29 becomes connected to the first main pump 71, and the flow passage 28 communicates with the tank. As a result, working oil is supplied from the flow passage 29 and the swing motor 76 rotates in the other direction, and also return oil from the swing motor 76 returns to the tank through the flow passage 28.

Next, the boom cylinder 77 will be described.

Connected to an actuator port of the operation valve 16 are flow passages 32 and 35 that communicate with the boom cylinder 77. When the operation valve 16 is maintained in the neutral position, the actuator port is closed, and the boom cylinder 77 maintains a stopped state.

When the operation valve 16 is switched to one side from the neutral position in a state in which the boom cylinder 77 is stopped, the working oil discharged from the second main pump 72 is supplied to a piston side chamber 33 of the boom cylinder 77 through the flow passage 32, and the return oil from a rod side chamber 34 returns to the tank through the flow passage 35. As a result, the boom cylinder 77 extends. When the operation valve 16 switches to the other side, the working oil discharged from the second main pump 72 is supplied to the rod side chamber 34 of the boom cylinder 77 through the flow passage 35, and the return oil from the piston side chamber 33 returns to the tank through the flow passage 32. As a result, the boom cylinder 77 contracts.

The operation valve 3 for boom second gear of the first circuit system 75 is switched in conjunction with the operation valve 16. In the flow passage 32 connecting the piston side chamber 33 of the boom cylinder 77 with the operation valve 16, an electromagnetic proportional throttle valve 36 whose opening degree is controlled by the controller 90 is provided. The electromagnetic proportional throttle valve 36 is maintained at a full open position in a normal state.

The control system 100 for the hybrid construction machine includes a regeneration device adapted to perform regeneration control that collects energy of working oil from the swing motor 76 and the boom cylinder 77. Hereinafter, the regeneration device will be described.

Regeneration control by the regeneration device is executed by the controller 90. The controller 90 includes a CPU (central processing unit) adapted to execute the regeneration control, a ROM (read only memory) in which a control program, setting values, and the like required for processing actions of the CPU are stored, and a RAM (random access memory) adapted to temporarily store information detected by various sensors.

First described is a swing regeneration control adapted to perform energy regeneration by using working oil from the swing motor 76.

Flow passages 28 and 29 connected to the swing motor 76 are connected to a swing regeneration flow passage 47 for guiding working oil from the swing motor 76 to the regeneration motor 88 for regeneration. In the flow passages 28 and 29, check valves 48 and 49 are provided, respectively, which check valves are adapted to allow only a flow of the working oil to the swing regeneration flow passage 47. The swing regeneration flow passage 47 is connected to the regeneration motor 88 through a joining regeneration flow passage 46.

The regeneration motor 88 is a variable capacity type motor in which a tilting angle of a swash plate can be adjusted, and is coupled to be coaxially rotated to a motor generator 91 as a rotating electric machine also serving as a power generator. The regeneration motor 88 is rotationally driven by working oil refluxed from the swing motor 76 and the boom cylinder 77 through the joining regeneration flow passage 46. Moreover, the regeneration motor 88, when performing an excess flow rate regeneration later described, is rotationally driven by working oil discharged and refluxed from the first and second main pumps 71 and 72. The tilting angle of the swash plate of the regeneration motor 88 is controlled by a tilting angle controller 38. The tilting angle controller 38 is controlled by an output signal of the controller 90.

The regeneration motor 88 can rotationally drive the motor generator 91. In a case where the motor generator 91 functions as a power generator, the regenerated electric power generated is charged into the battery 26 via an inverter 92. The regeneration motor 88 and the motor generator 91 may be directly coupled together or may be coupled via a reducer.

On the upstream of the regeneration motor 88, a pump-up passage 61 is connected, through which the working oil is pumped up from the tank to a joining regeneration flow passage 46 and supplied to the regeneration motor 88 in a case where an amount of supplied working oil to the regeneration motor 88 becomes insufficient. In the pump-up passage 61, a check valve 61a is provided, which check valve is adapted to allow only a flow of the working oil from the tank to the joining regeneration passage 46.

In the swing regeneration flow passage 47, a solenoid switching valve 50 that is controlled in its switching based on a signal outputted from the controller 90 is provided. Between the solenoid switching valve 50 and the check valves 48 and 49, a pressure sensor 51 is provided, which pressure sensor is adapted to detect swing pressure at a time of swing action of the swing motor 76 or brake pressure at the time of break action. A pressure signal detected by the pressure sensor 51 is outputted to the controller 90.

At the time of brake action in which the operation valve 2 is switched to the neutral position while the swing motor 76 is swinging caused by the working oil supplied through the flow passages 28 and 29, the working oil discharged by a pump effect of the swing motor 76 flows into the swing regeneration flow passage 47 through the check valves 48 and 49, and is guided to the regeneration motor 88.

On the downstream side of the solenoid switching valve 50 in the swing regeneration flow passage 47, a safety valve 52 is provided. The safety valve 52 prevents the swing motor 76 from overrunning, by maintaining the pressure of the flow passages 28 and 29, for example when an abnormality occurs to the solenoid switching valve 50 of the swing regeneration flow passage 47.

Upon judging that a pressure detected by the pressure sensor 51 is equal to or more than a swinging regeneration starting pressure, the controller 90 excites a solenoid of the solenoid switching valve 50. As a result, the solenoid switching valve 50 switches to the opened position to start the swing regeneration. When it is judged that the pressure detected by the pressure sensor 51 is less than the turning regeneration starting pressure, the controller 90 makes the solenoid of the solenoid switching valve 50 in a non-excited state. As a result, the solenoid switching valve 50 switches to the closed position, and the swinging regeneration stops.

Next describes a boom regeneration control adapted to perform energy regeneration by using working oil from the boom cylinder 77.

The boom regeneration flow passage 53 dividing from a part between the piston side chamber 33 and the electromagnetic proportional throttle valve 36 is connected to the flow passage 32. The boom regeneration flow passage 53 is a flow passage for guiding return working oil from the piston side chamber 33 to the regeneration motor 88. The swing regeneration flow passage 47 and the boom regeneration flow passage 53 join and connect to the joining regeneration flow passage 46.

In the boom regeneration flow passage 53, a switching valve 54 to be controlled in its switching by a signal outputted from the controller 90 is provided. When the solenoid is not excited, the solenoid switching valve 54 is switched to a closed position (state shown in drawing), to block the boom regeneration flow passage 53. When the solenoid is excited, the solenoid switching valve 54 is switched to an opened position, to communicate the boom regeneration flow passage 53 and allow for only the flow of the working oil from the piston side chamber 33 to the joining regeneration flow passage 46.

The controller 90 judges whether the operator intends to extend or contract the boom cylinder 77 on the basis of a detection result of a sensor (not shown) adapted to detect an operating direction and an operated amount of the operation valve 16. Upon judging an extending action of the boom cylinder 77, the controller 90 maintains the electromagnetic proportional throttle valve 36 at a full open position being the normal state, and maintains the solenoid switching valve 54 at a closed position. Meanwhile, when the controller 90 judges a contracting action of the boom cylinder 77, the controller 90 calculates a contracting speed of the boom cylinder 77 requested by the operator in accordance with the operated amount of the operation valve 16, and closes the electromagnetic proportional throttle valve 36 to switch the solenoid switching valve 54 to the opened position. Thereby, all the return working oil from the boom cylinder 77 is guided to the regeneration motor 88, and the boom regeneration is performed.

The following describes an excess flow rate regeneration control (standby regeneration control) adapted to perform energy regeneration by collecting energy from the working oil from the neutral flow passages 7 and 18. The excess flow rate regeneration control is performed by the controller 90, similarly with the swing regeneration control and the boom regeneration control.

Flow passages 55 and 56 are connected to the first and second main pumps 71 and 72, respectively. Solenoid valves 58 and 59 are provided in the flow passages 55 and 56, respectively. The flow passages 55 and 56 are connected on upstream sides of the first and second circuit systems 75 and 78 of the first and second main pumps 71 and 72, respectively. The solenoid valves 58 and 59 have solenoids to be connected to the controller 90.

The solenoid valves 58 and 59 are switched to a closed position (position as shown) when the solenoid is non-excited, and are switched to an opened position when the solenoid is excited. The solenoid valves 58 and 59 are connected to the regeneration motor 88 via a joining flow passage 57 and a check valve 60.

The controller 90 excites the solenoid of the solenoid valve 58 when all the operation valves 2 to 6 of the first circuit system 75 are in their neutral positions, on the basis of a signal from a first pressure sensor 13. As a result, the solenoid valve 58 switches to the opened position. At this time, the controller 90 excites the solenoid of the on/ off valve 9 to switch the on/ off valve 9 to a closed state. As a result, the working oil discharged from the first main pump 71 to the neutral flow passage 7 is guided to the joining regeneration flow passage 46 through the flow passage 55, and the excess flow rate regeneration of the first circuit system 75 is performed. At this time, the pilot pressure generated by the pilot pressure generation mechanism 10 is minimized, and hence the regulator 12 controls so that the volume of the first main pump 71 becomes maximized.

Similarly, the controller 90 excites the solenoid of the solenoid valve 59 when all of the operation valves 14 to 17 of the second circuit system 78 are in their neutral positions, on the basis of a signal from a second pressure sensor 24. As a result, the solenoid valve 59 switches to the opened position. At this time, the controller 90 excites the solenoid of the on/off valve 21 to switch the on/off valve 21 to a closed state. As a result, the working oil discharged from the second main pump 72 to the neutral flow passage 18 is guided to the joining regeneration flow passage 46 through the flow passage 56, and the excess flow rate regeneration of the second circuit system 78 is performed. At this time, the pilot pressure generated by the pilot pressure generation mechanism 20 is minimized, and hence the regulator 23 controls so that the volume of the second main pump 72 is maximized.

As such, the working oil discharged from the first and second main pumps 71 and 72 is supplied to the regeneration motor 88 via the solenoid valves 58 and 59, and rotationally drives the regeneration motor 88. The regeneration motor 88 rotationally drives the motor generator 91 to generate power. The electric power generated by the motor generator 91 is charged into the battery 26 via the inverter 92. This performs the excess flow rate regeneration by the excess flow rate of the working oil discharged from the first and second main pumps 71 and 72.

The following describes an assist control adapted to assist outputs of the first and second main pumps 71 and 72 by energy of working oil from the assist pump 89.

The assist pump 89 rotates coaxially with the regeneration motor 88. The assist pump 89 rotates by drive force when using the motor generator 91 as an electric motor, and drive force by the regeneration motor 88. The rotation number of the motor generator 91 is controlled by the controller 90 connected to the inverter 92. Moreover, a tilting angle of a swash plate of the assist pump 89 is controlled by a tilting angle controller 37. The tilting angle controller 37 is controlled by an output signal of the controller 90.

The discharge passage 39 of the assist pump 89 is divided into a first assist passage 40 joining to the discharge side of the first main pump 71 and a second assist passage 41 joining to the discharge side of the second main pump 72. First and second electromagnetic proportional throttle valves 42 and 43 whose opening degrees are controlled by output signals from the controller 90 are respectively provided in the first and second assist passages 40 and 41. Check valves 44 and 45 adapted to allow only flows of the working oil from the assist pump 89 to the first and second main pumps 71 and 72 are respectively provided in the first and second assist flow passages 40 and 41 at the downstream of the first and second electromagnetic proportional throttle valves 42 and 43.

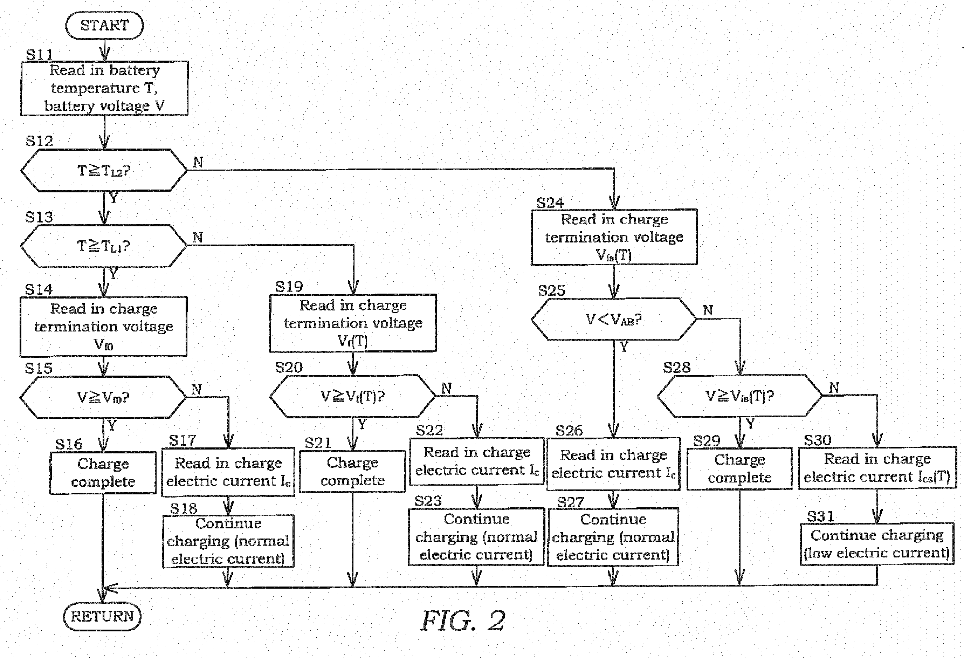

Next, mainly with reference to Figs. 2 to 6, the excess flow rate regeneration control performed according to a temperature T [°C] of the battery 26 in the control system 100 for the hybrid construction machine will be described.

This excess flow rate generation is performed during a non-operation timing in which the actuator is not operating, and in a case where the working oil discharged from the first and second main pumps 71 and 72 are refluxed as they are. Thus, since the excess flow rate regeneration is performed before starting operation immediately after activating the hybrid construction machine or in a case where the actuator is not operating even during operation, it is possible to prevent any effects given on the actions of the hybrid construction machine.

Generally, storage batteries such as lithium-ion rechargeable batteries and nickel-hydrogen rechargeable batteries rise in internal resistance R(T) [Ω] while charging as the temperature T decreases. Therefore, depending on the temperature T of the storage battery, when charged with an electric current $i_c$ [A] of normal charging, a voltage drop equivalent to the internal resistance R(T) after charge termination may occur although an apparent voltage $V_f$ [V] of the storage battery has reached a charge termination voltage $V_{f0}$ [V] at full charge $(V_f = V_{f0} - i_c \times R(T))$.

Moreover, in a case where the voltage of the storage battery decreases from the charge termination voltage $V_{f0}$ [V] at full charge caused by the voltage drop after charge termination, this may be judged as incomplete charging and the charging of the storage battery may be performed again.

On this account, in the present embodiment, full charging is enabled even in a case where the temperature T of the battery 26 is low, by adjusting the charging electric current and the charge termination voltage in accordance with the temperature T of the battery 26. The controller 90 repetitively performs a routine shown in Fig. 2 during operation of the hybrid construction machine, for example at constant time intervals of 10 milliseconds.

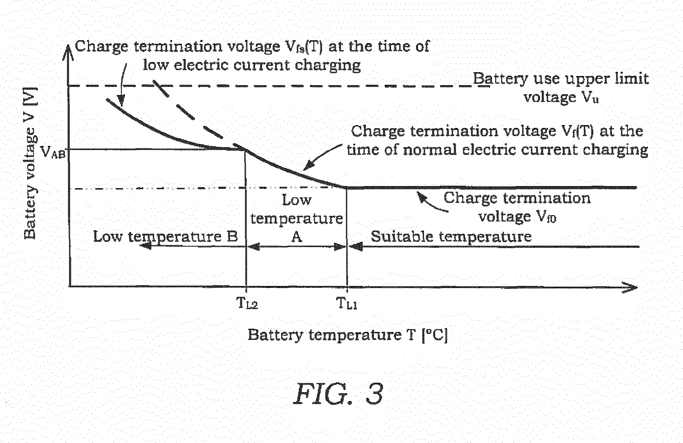

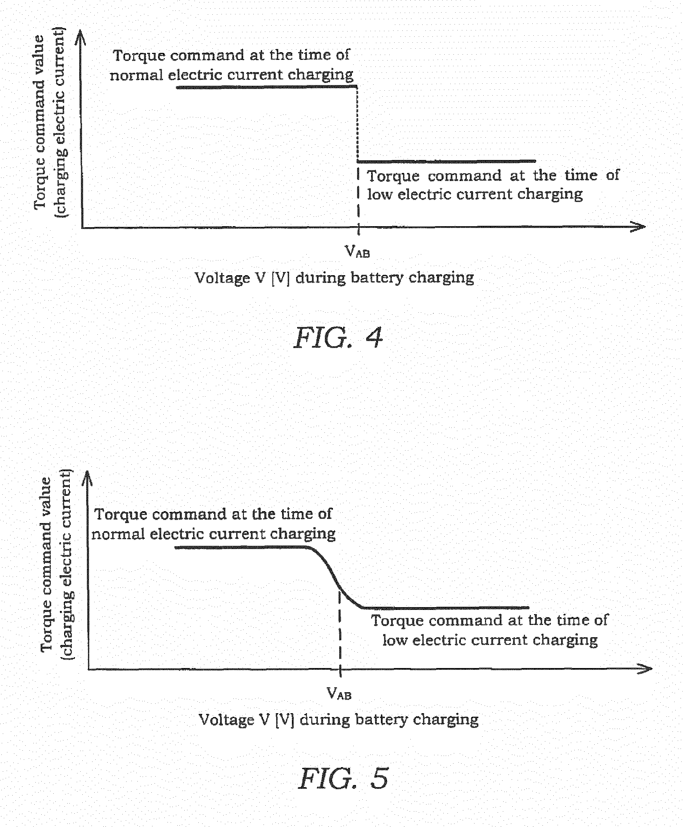

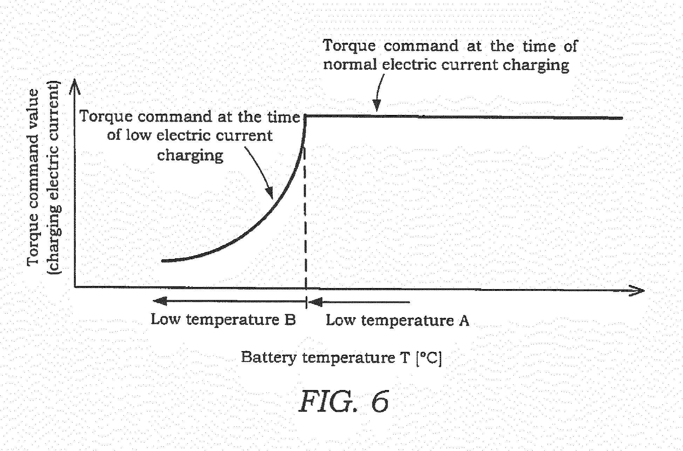

In Fig. 3, the horizontal axis represents the temperature T of the battery 26, and the vertical axis represents the voltage [V] of the battery 26. In Fig. 4 and Fig. 5, the horizontal axis represents the voltage V of the battery 26 while being charged, and the vertical axis represents the torque command value (charging electric current) of the motor generator 91. In Fig. 6, the horizontal axis represents the temperature T of the battery 26, and the vertical axis represents the torque command value (charging electric current) of the motor generator 91.

In step S11 of Fig. 2, the controller 90 reads in the temperature T of the battery 26 detected by the temperature sensor 26a and the voltage V of the battery 26 detected by the voltage sensor.

In step S12, judgment is made on whether or not the temperature T of the battery 26 is equal to or more than a second set temperature $T_{L2}$ [°C] that is lower than a first set temperature $T_{L1}$ [°C] later described. In step S12, when the temperature T is judged as equal to or more than the second set temperature $T_{L2}$, the procedure proceeds to step S13. Meanwhile, in step S12, when the temperature T is judged as not equal to or more than the second set temperature $T_{L2}$, namely, lower than the second set temperature $T_{L2}$, the temperature T of the battery 26 is within a range of a low temperature B (see Fig. 3), and thus the procedure proceeds to step S24.

In step S13, judgment is made on whether or not the temperature T of the battery 26 is equal to or more than the first set temperature $T_{L1}$. When it is judged in step S13 that the temperature T is equal to or more than the first set temperature $T_{L1}$, the temperature T of the battery 26 is within a suitable temperature (see Fig. 3) range; thus, the procedure proceeds to step S14. Meanwhile, when the temperature T is judged as not equal to or more than the first set temperature $T_{L1}$ in step S13, namely, lower than the first set temperature $T_{L1}$, the temperature T of the battery 26 is within a low temperature A (see Fig. 3) range; thus, the procedure proceeds to step S19.

From step S14 to step S18 is a flow for when the temperature T of the battery 26 is within a suitable temperature range.

In step S14, a charge termination voltage $V_{f0}$ [V] when the temperature T of the battery 26 is within the suitable temperature range is read in, from the map of Fig. 3. This charge termination voltage $V_{f0}$ is a rated charge termination voltage of the battery 26.

In step S15, a judgment is made as to whether or not the voltage V of the battery 26 is equal to or more than the charge termination voltage $V_{f0}$. When the voltage V is judged in step S15 as equal to or more than the charge termination voltage $V_{f0}$, the charging of the battery 26 is completed; thus, the procedure proceeds to step S16 to perform a process to terminate the charging, and thereafter, returns. Meanwhile, when the voltage V is judged in step S15 as not equal to or more than the charge termination voltage $V_{f0}$, namely, judged lower than the charge termination voltage $V_{f0}$, the charging of the battery 26 is incomplete, and thus the procedure proceeds to step S17.

In step S17, the temperature T of the battery 26 is within the suitable temperature range, the internal resistance $R(T)$ is sufficiently low, and charging may be performed with a normal charging electric current $i_c$ [A]; thus, the charging electric current is set to the normal charging electric current $i_c$. Moreover, the procedure proceeds to step S18 and continues with the charging of the battery 26 with the charging electric current $i_c$.

From step S19 to step S23 is a flow for when the temperature $T$ of the battery 26 is within a range of low temperature A. The range of low temperature A is a range in which even when charging is performed to a voltage higher by the amount of the voltage drop caused by the internal resistance $R(T)$ of an amount corresponding to the temperature $T$ of the battery 26, the voltage will not reach a use upper limit voltage $V_u$ [V] of the battery 26

$$(V_{f0} + i_c \times R(T) < V_u).$$

In step S19, a charge termination voltage $V_f(T)$ [V] of when the temperature $T$ of the battery 26 is within the range of low temperature A is read in, from the map of Fig. 3. This charge termination voltage $V_f(T)$ is a value in which a voltage of a voltage drop amount calculated from the internal resistance $R(T)$ of the battery 26 and the charging electric current $i_c$ is added to the charge termination voltage $V_{f0}$ of when the temperature $T$ of the battery 26 is at a suitable temperature ($V_f(T) = V_{f0} + i_c \times R(T)$).

In step S20, a judgment is made as to whether or not the voltage $V$ of the battery 26 is equal to or more than the charge termination voltage $V_f(T)$. When the voltage $V$ is judged in step S20 as being equal to or more than the charge termination voltage $V_f(T)$, the charging of the battery 26 is completed; thus, the procedure proceeds to step S21 to perform a process to terminate the charging, and thereafter, returns. Meanwhile, when the voltage $V$ is judged in step S20 as being not equal to or more than the charge termination voltage $V_f(T)$, namely, as being lower than the charge termination voltage $V_f(T)$, the charging of the battery 26 is incomplete, and thus the procedure proceeds to step S22.

In step S22, the temperature $T$ of the battery 26 is within the range of the low temperature A, the internal resistance $R(T)$ is not that high, and charging may be performed with the normal charging electric current $i_c$ [A]. Thus, the charging electric current is set to the normal charging electric current $i_c$. The procedure then proceeds to step S23 and continues with the charging of the battery 26 with the charging electric current $i_c$.

As such, when the temperature $T$ of the battery 26 is below the first set temperature $T_{L1}$ and is within the range of the low temperature A, the controller 90 charges the regenerated electric power until achieving a voltage higher than the charge termination voltage $V_{f0}$ of when the temperature $T$ of the battery 26 is equal to or more than the first set temperature $T_{L1}$ by the amount of internal resistance $R(T)$ in accordance with the temperature $T$ of the battery 26.

As a result, it is possible to make the voltage of the battery 26 after occurrence of a voltage drop caused by the internal resistance $R(T)$ upon complete charging, to be the charge termination voltage $V_{f0}$ when the temperature $T$ of the battery 26 is equal to or more than the first set temperature $T_{L1}$. Therefore, it is possible to perform the charging of regenerated electric power to the battery 26 even in a state in which the temperature $T$ of the battery 26 is low.

From step S24 to step S31 is a flow for when the temperature $T$ of the battery 26 is within a range of a low temperature B that is lower as compared to the low temperature A. The range of low temperature B is a range that may exceed the use upper limit voltage $V_u$ of the battery 26 if charging is performed with the normal charging electric current $i_c$ up to a voltage higher by the amount of the voltage drop caused by the internal resistance $R(T)$ of a greatness corresponding to the temperature $T$ of the battery 26.

In step S24, a charge termination voltage $V_{fs}(T)$ [V] of when the temperature $T$ of the battery 26 is within the range of the low temperature B is read in, from the map of Fig. 3. This charge termination voltage $V_{fs}(T)$ is a value in which a voltage of a voltage drop amount calculated from the internal resistance $R(T)$ of the battery 26 and a low charging electric current $i_{cs}(T)$ [A] later described is added to the charge termination voltage $V_{f0}$ of when the temperature $T$ of the battery 26 is at a suitable temperature ($V_{fs}(T) = V_{f0} + i_{cs} \times R(T)$).

In step S25, a judgment is made as to whether or not the voltage $V$ of the battery 26 is lower than a voltage $V_{AB}$ [V] being the charge termination voltage $V_f(T)$ when the temperature $T$ of the battery 26 is at the second set temperature $T_{L2}$ (borderline between the low temperature A and the low temperature B). When the voltage $V$ is judged lower than the voltage $V_{AB}$ in step S25, the voltage is of a highness within a range where the voltage $V$ of the battery 26 does not exceed the use upper limit voltage $V_u$ of the battery 26 even if the charging with the normal charging electric current $i_c$ is continued, and thus the procedure proceeds to step S26. Meanwhile, when the voltage $V$ is judged not lower than the voltage $V_{AB}$, namely, as equal to or more than the voltage $V_{AB}$, the voltage $V$ of the battery 26 has risen to a highness that may reach the use upper limit voltage $V_u$ if continuing to charge with the normal charging electric current $i_c$, and thus the procedure proceeds to step S28 and the charging electric current is reduced to a low charging electric current $i_{cs}(T)$.

In step S26, the temperature $T$ of the battery 26 is within the range of the low temperature B, however the voltage $V$ of the battery 26 is not risen to the voltage $V_{AB}$, and is chargeable with the normal charging electric current $i_c$. Hence, the charging electric current is set to the normal charging electric current $i_c$. Thereafter, the procedure proceeds to step S27 and continues the charging of the battery 26 with the normal electric current.

Meanwhile, in step S28, a judgment is made as to whether or not the voltage V of the battery 26 is equal to or more than the charge termination voltage $V_{fs}(T)$. When the voltage V is judged in step S28 as being equal to or more than the charge termination voltage $V_{fs}(T)$, the charging of the battery 26 is completed; thus, the procedure proceeds to step S29 to perform a process to terminate the charging, and thereafter, returns. Meanwhile, when the voltage V is judged in step S28 as not being equal to or more than the charge termination voltage $V_{fs}(T)$, namely, as being lower than the charge termination voltage $V_{fs}(T)$, the charging of the battery 26 is incomplete, and thus the procedure proceeds to step S30.

In step S30, the temperature T of the battery 26 is within the range of the low temperature B, and the voltage V of the battery 26 exceeds the voltage $V_{AB}$ and requires to be charged with a lower electric current than the normal charging electric current $i_c$. Hence, the charging electric current is set to a low charging electric current $i_{cs}(T)$ in accordance with the temperature T of the battery 26. Thereafter, the procedure proceeds to step S31 and continues with the charging of the battery 26 with the low charging electric current $i_{cs}(T)$.

Here, when the charging electric current is switched from the normal charging electric current $i_c$ to the low charging electric current $i_{cs}(T)$, in a case where the voltage V of the battery 26 is high compared to $V_{AB}$, the voltage is adjusted lower compared to the charging electric current $i_c$ of the normal electric current by reducing the torque command value for adjusting a magnitude of the torque when the regeneration motor 88 rotationally drives the motor generator 91, as shown in Fig. 4. More specifically, the torque command value changes by the controller 90 outputting a command according to the torque command value to the inverter 92. When the torque command value is reduced, the torque of when the regeneration motor 88 rotationally drives the motor generator 91 is also reduced.

As shown in Fig. 5, the torque command value may be made to change between the normal charging electric current $i_c$ and the low charging electric current $i_{cs}(T)$ by first order lag properties. In this case, since the amount of generated power of the motor generator 91 does not change suddenly, it is possible to minimize any noise and impact caused by the change in the amount of generated power.

As shown in Fig. 6, the controller 90 sets the torque command value smaller as the temperature T of the battery 26 decreases, within the range of the low temperature B. Namely, within the range of the low temperature B, the controller 90 reduces the low charging electric current $i_{cs}(T)$ as the temperature T of the battery 26 decreases. Moreover, the controller 90 reduces a reduced rate of the low charging electric current $i_{cs}(T)$ to the battery 26 as the temperature T of the battery 26 decreases.

As a result, it is possible to broaden the range of the low temperature A that charges the battery 26 with the normal charging electric current $i_c$, and thus can shorten charging time of the battery 26. Moreover, since a low limit of the range of the low temperature B can be set to a low temperature T, it is possible to broaden the temperature range that allows for charging the battery 26.

As described above, when the temperature T of the battery 26 is below the second set temperature $T_{L2}$, the controller 90 makes the charging electric current to the battery 26 be a low charging electric current $i_{cs}(T)$ set lower than the normal charging electric current $i_c$. As a result, even if a voltage of the voltage drop amount calculated from the internal resistance R(T) of the battery 26 and the low charging electric current $i_{cs}(T)$ is added to the charge termination voltage $V_{f0}$ of when the temperature T of the battery 26 is a suitable temperature, the voltage will not exceed the use upper limit voltage $V_u$ of the battery 26, since the low charging electric current $i_{cs}(T)$ is set low ($V_{f0} + i_{cs}(T) \times R(T) < V_u$). Therefore, it is possible to charge regenerated electric power into the battery 26 even in a state in which the temperature T of the battery 26 is low.

Moreover, the controller 90, when continuing charging in steps S18, S23, S27, and S31, returns to step S11 and again reads in the temperature T and the voltage V of the battery 26. In such a way, the controller 90 performs charging of the regenerated electric power even while the battery 26 is being charged with the regenerated electric power, by updating the temperature T and the voltage V of the battery 26 every time the routine of Fig. 2 is repeated.

For example, when the internal resistance R(T) is high as in the range of the low temperature B, the amount of heat generated at the time of charging is great. Therefore, when the battery 26 is charged, the temperature T of the battery 26 increases. Moreover, the low charging electric current $i_{cs}(T)$ of when charging the battery 26 within the range of the low temperature B increases in accordance with the increase in the temperature T of the battery 26. This causes the charging electric current to increase in accordance with the increase in the temperature T of the battery 26, and thus it is possible to shorten the charging time.

Moreover, when the temperature T increases from the range of the low temperature B to within the range of the low temperature A, or when the temperature T increases from the range of the low temperature A to within the suitable temperature range, the charge termination voltage changes. In such a way, the controller 90 constantly adjusts the charging electric current and the charge termination voltage in accordance with the change in temperature of the battery 26. Accordingly, it is possible to perform suitable charging of the regenerated electric power in accordance with the temperature T of the battery 26.

According to the above embodiment, the following effects are exerted.

When the temperature T of the battery 26 becomes below the first set temperature $T_{L1}$, the battery 26 is charged with regenerated electric power until achieving a voltage higher than the charge termination voltage $V_{f0}$ of when the temperature T of the battery 26 is equal to or more than the first set temperature $T_{L1}$ by the amount of the internal resistance R(T) in accordance with the temperature of the battery 26. Thus, it is possible to make the voltage of the battery 26 after occurrence of a voltage drop caused by the internal resistance R(T) upon complete charging to be the charge termination voltage $V_{f0}$ of when the temperature T of the battery 26 is the first set temperature $T_{L1}$.

Moreover, when the temperature T of the battery 26 becomes below the second set temperature $T_{L2}$, the charging electric current to the battery 26 is made to be a low charging electric current $i_{cs}(T)$ set lower than the normal charging electric current $i_c$. As a result, even if a voltage of the voltage drop amount calculated from the internal resistance R(T) of the battery 26 and the low charging electric current $i_{cs}(T)$ is added to the charge termination voltage $V_{f0}$ of when the temperature T of the battery 26 is a suitable temperature, the voltage will not exceed a use upper limit voltage $V_u$ of the battery 26 since the low charging electric current $i_{cs}(T)$ is set small.

Therefore, it is possible to perform the charging of regenerated electric power to the battery 26 even in a state in which the temperature of the battery 26 is low.

Configurations, operations, and effects of the embodiment of the present invention will be summarized below.

A control system 100 for a hybrid construction machine includes: first and second main pumps 71 and 72 adapted to supply working oil to an actuator; a regeneration motor 88 rotationally driven by working oil discharged and refluxed from the first and second main pumps 71 and 72; a motor generator 91 rotationally driven by the regeneration motor 88; a battery 26 adapted to be charged with regenerated electric power generated by the motor generator 91; a temperature sensor 26a adapted to detect a temperature of the battery 26; and a controller 90 adapted to control charging of regenerated electric power to the battery 26, the controller 90, when the temperature T of the battery 26 becomes below a first set temperature $T_{L1}$, charges with the regeneration electric power until achieving a voltage higher than a charge termination voltage $V_{f0}$ of when the temperature T of the battery 26 is equal to or more than the first set temperature $T_{L1}$ by an amount of internal resistance R(T) according to the temperature T of the battery 26.

In this configuration, when the temperature T of the battery 26 becomes below the first set temperature $T_{L1}$, the battery 26 is charged with the regenerated electric power until achieving a voltage higher than a charge termination voltage $V_{f0}$ of when the temperature T of the battery 26 is equal to or more than the first set temperature $T_{L1}$ by the amount of the internal resistance R(T) in accordance with the temperature of the battery 26. Thus, it is possible to make the voltage of the battery 26 after occurrence of a voltage drop caused by the internal resistance R(T) upon complete charging to be the charge termination voltage $V_{f0}$ of when the temperature T of the battery 26 is the first set temperature $T_{L1}$. Therefore, it is possible to charge regenerated electric power to the battery 26 even in a state in which the temperature of the battery 26 is low.

Moreover, the controller 90 reduces the charging electric current to the battery 26 when the temperature T of the battery 26 becomes below the second set temperature $T_{L2}$ that is lower than the first set temperature $T_{L1}$.

Moreover, the controller 90 reduces the charging electric current to the battery 26 by reducing the torque command value of when the regeneration motor 88 rotationally drives the motor generator 91.

In these configurations, when the temperature T of the battery 26 becomes below the second set temperature $T_{L2}$, the charging electric current to the battery 26 is made to be a low charging electric current $i_{cs}(T)$ set lower than the normal charging electric current $i_c$. As a result, even if a voltage of the voltage drop amount calculated from the internal resistance R(T) of the battery 26 and the low charging electric current $i_{cs}(T)$ is added to the charge termination voltage $V_{f0}$ of when the temperature T of the battery 26 is a suitable temperature, the voltage will not exceed the use upper limit voltage $V_u$ of the battery 26 since the low charging electric current $i_{cs}(T)$ is set small. Therefore, it is possible to perform the charging of regenerated electric power to the battery 26 even in a state in which the temperature of the battery 26 is low.

Moreover, the controller 90 changes the torque command value of the regeneration motor by first order lag properties.

In this configuration, since the amount of generated power of the motor generator 91 does not change suddenly, it is possible to minimize any noise and impact caused by the change in the amount of generated power.

Moreover, the controller 90 reduces the charging electric current to the battery 26 as the temperature T of the battery 26 decreases.

Moreover, the controller 90 reduces a reduced rate of the charging electric current to the battery 26 as the temperature T of the battery 26 decreases.

In these configurations, a lower limit in the range of the low temperature B can be set to a low temperature T by reducing the charging electric current as the temperature T of the battery 26 decreases. Accordingly, it is possible to broaden the temperature range that allows for charging the battery 26.

Moreover, the controller 90 adjusts the charging electric current to the battery 26 in accordance with the temperature T of the battery 26 also while regenerated electric power is charged to the battery 26.

In this configuration, when the temperature T increases within the range of the low temperature B, the charging electric current changes. In such a way, the controller 90 constantly adjusts the charging electric current in accordance with a temperature change of the battery 26. Therefore, it is possible to perform suitable charging of regenerated electric power in accordance with the temperature T of the battery 26.

Moreover, the charging of regenerated electric power to the battery 26 is performed in a case where the actuator is not operating and the working oil discharged from the first and second main pumps 71 and 72 are refluxed as they are.

In this configuration, since the excess flow rate regeneration is performed before starting operation, immediately after activating the hybrid construction machine, or in a case where the actuator is not operating during operation, it is possible to prevent any effects given on the actions of the hybrid construction machine.

Moreover, a control method for controlling a hybrid construction machine including a regeneration motor 88 rotationally driven by working oil discharged and refluxed from first and second main pumps 71 and 72, a motor generator 91 rotationally driven by the regeneration motor 88, and a battery 26 adapted to be charged with regenerated electric power generated by the motor generator 91, detects a temperature of the battery 26, and, performs charging of the regenerated electric power when a temperature T of the battery 26 becomes below a first set temperature $T_{L1}$, until achieving a voltage higher than a charge termination voltage $V_{f0}$ of when the temperature of the battery 26 is equal to or more than the first set temperature $T_{L1}$ by an amount of an internal resistance R(T) in accordance with the temperature of the battery 26.

In this configuration, when the temperature T of the battery 26 becomes below the first set temperature $T_{L1}$, the battery 26 is charged with the regenerated electric power until achieving a voltage higher than the charge termination voltage $V_{f0}$ of when the temperature T of the battery 26 is equal to or more than the first set temperature $T_{L1}$ by the amount of the internal resistance R(T) in accordance with the temperature of the battery 26. Thus, it is possible to make the voltage of the battery 26 after occurrence of a voltage drop caused by the internal resistance R(T) upon complete charging to be the charge termination voltage $V_{f0}$ of when the temperature T of the battery 26 is the first set temperature $T_{L1}$. Therefore, it is possible to charge regenerated electric power to the battery 26 even in a state in which the temperature of the battery 26 is low.

Embodiments of this invention were described above, but the above embodiments are merely examples of applications of this invention, and the technical scope of this invention is not limited to the specific constitutions of the above embodiments.

For example, the above embodiment describes a regeneration control in accordance with a temperature T of the battery 26 in a case of performing excess flow rate regeneration control when an actuator is not operating and working oil discharged from the first and second main pumps 71 and 72 are refluxed as they are; alternatively, a regeneration control in accordance with the temperature T of the battery 26 may be performed using working oil refluxed from actuators such as the swing motor 76 and the boom cylinder 77.

Moreover, in the above embodiment, when charging the battery 26 within the range of the low temperature B, the torque command value is reduced to reduce to the low charging electric current $i_{cs}(T)$; alternatively, the tilting angle of the swash plate of the first and second main pumps 71 and 72 may be reduced to reduce the flow rate of the working oil refluxed to the regeneration motor 88, to reduce the charging electric current to the low charging electric current $i_{cs}(T)$. In this case, the first and the second main pumps 71 and 72 are adjusted to a power required to charge the battery 26, and hence it is possible to efficiently perform the charging of the battery 26.

Moreover, instead of the map shown in Fig. 3 and Fig. 6, a function f(T) having the temperature T of the battery 26 serve as a variable may be used.

This application claims priority to Japanese Patent Application No. 2015-129870 filed in the Japanese Patent Office on June 29, 2015, the entire contents of which are incorporated by reference herein.

**Claims**

1. A control system for a hybrid construction machine, comprising:

   a fluid pressure pump configured to supply a working fluid to a fluid pressure actuator;
   a regeneration motor rotationally driven by working fluid discharged and refluxed from the fluid pressure pump;
   a rotating electric machine rotationally driven by the regeneration motor;
   an energy storage part configured to store regenerated electric power generated by the rotating electric machine;
   a temperature detecting part configured to detect a temperature of the energy storage part; and
   a control part configured to control charging of regenerated electric power to the energy storage part,
   when a temperature of the energy storage part is below a first set temperature, the control part charging with the regenerated electric power until achieving a voltage higher than a charge termination voltage of when the temperature of the energy storage part is equal to or more than the first set temperature by an amount of internal resistance in accordance with the temperature of the energy storage part.

**2.** The control system for the hybrid construction machine according to claim 1, wherein
when the temperature of the energy storage part becomes below a second set temperature lower than the first set temperature, the control part reduces the charging electric current to the energy storage part.

**3.** The control system for the hybrid construction machine according to claim 2, wherein
the control part reduces the charging electric current to the energy storage part by reducing a torque of when the regeneration motor rotationally drives the rotational electric machine.

**4.** The control system for the hybrid construction machine according to claim 3, wherein
the control part changes the torque of the regeneration motor by first order lag properties.

**5.** The control system for the hybrid construction machine according to claim 2, wherein
the control part reduces the charging electric current to the energy storage part as the temperature of the energy storage part decreases.

**6.** The control system for the hybrid construction machine according to claim 5, wherein
the control part reduces a reduced rate of the charging electric current to the energy storage part as the temperature of the energy storage part decreases.

**7.** The control system for the hybrid construction machine according to claim 2, wherein
the control part adjusts a charging electric current to the energy storage part in accordance with the temperature of the energy storage part even while charging of the regenerated electric power to the energy storage part is performed.

**8.** The control system for the hybrid construction machine according to claim 1, wherein
charging of regenerated electric power to the energy storage part is performed when the fluid pressure actuator is not operating and working fluid discharged from the fluid pressure pump is refluxed directly.

**9.** A control method for controlling a hybrid construction machine comprising a regeneration motor rotationally driven by working fluid discharged and refluxed from a fluid pressure pump, a rotating electric machine rotationally driven by the regeneration motor, and an energy storage part configured to be charged with regenerated electric power generated by the rotating electric machine, the method comprising:

  detecting a temperature of the energy storage part; and

charging with regenerated electric power when the temperature of the energy storage part becomes below a first set temperature, until achieving a voltage higher than a charge termination voltage of when the temperature of the energy storage part is equal to or more than the first set temperature by an amount of internal resistance in accordance with the temperature of the energy storage part.

FIG. 1

EP 3 276 738 A1

START

S11 → Read in battery temperature T, battery voltage V

S12 → T≧T_{L2}? — N →

S13 → T≧T_{L1}? — N →

S14 → Read in charge termination voltage V_{f0}

S15 → V≧V_{f0}? — N →

S16 → Charge complete

S17 → Read in charge electric current I_c

S18 → Continue charging (normal electric current)

S19 → Read in charge termination voltage V_f(T)

S20 → V≧V_f(T)? — N →

S21 → Charge complete

S22 → Read in charge electric current I_c

S23 → Continue charging (normal electric current)

S24 → Read in charge termination voltage V_{fs}(T)

S25 → V<V_{AB}? — N →

S26 → Read in charge electric current I_c

S27 → Continue charging (normal electric current)

S28 → V≧V_{fs}(T)? — N →

S29 → Charge complete

S30 → Read in charge electric current I_{cs}(T)

S31 → Continue charging (low electric current)

RETURN

*FIG. 2*

FIG. 3

FIG. 4

FIG. 5

FIG. 6

## INTERNATIONAL SEARCH REPORT

| | International application No. |
|---|---|
| | PCT/JP2016/066134 |

**A. CLASSIFICATION OF SUBJECT MATTER**
*H01M10/48*(2006.01)i, *B60L11/18*(2006.01)i, *E02F9/20*(2006.01)i, *H01M10/44*(2006.01)i

According to International Patent Classification (IPC) or to both national classification and IPC

**B. FIELDS SEARCHED**

Minimum documentation searched (classification system followed by classification symbols)
H01M10/48, B60L11/18, E02F9/20, H01M10/44

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2011-241539 A (Kayaba Industry Co., Ltd.),<br>01 December 2011 (01.12.2011),<br>paragraphs [0060] to [0073]; fig. 1, 4 to 6<br>& US 2013/0035820 A1<br>paragraphs [0084] to [0103]; fig. 1, 4 to 6<br>& WO 2011/142187 A1    & DE 112011101655 T<br>& CN 102906345 A        & KR 10-2012-0137410 A | 1,8-9<br>2-7 |
| Y<br>A | JP 2008-253129 A (Matsushita Electric<br>Industrial Co., Ltd.),<br>16 October 2008 (16.10.2008),<br>paragraphs [0033] to [0050]; fig. 1 to 4<br>& US 2010/0156356 A1<br>paragraphs [0024] to [0041]; fig. 1 to 4<br>& WO 2008/108102 A1    & EP 2131440 A1<br>& KR 10-2009-0122470 A  & CN 101636872 A | 1,8-9<br>2-7 |

| ☒ Further documents are listed in the continuation of Box C. | ☐ See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 08 August 2016 (08.08.16) | 16 August 2016 (16.08.16) |

| Name and mailing address of the ISA/ | Authorized officer |
|---|---|
| Japan Patent Office<br>3-4-3,Kasumigaseki,Chiyoda-ku,<br>Tokyo 100-8915,Japan | |
| | Telephone No. |

Form PCT/ISA/210 (second sheet) (January 2015)

**INTERNATIONAL SEARCH REPORT**

| International application No. |
| --- |
| PCT/JP2016/066134 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | JP 2011-017427 A (Kayaba Industry Co., Ltd.), 27 January 2011 (27.01.2011), abstract; fig. 1 to 2 & US 2011/0265467 A1 abstract; fig. 1 to 2 & WO 2011/004879 A1  & DE 112010002883 B & KR 10-2011-0093935 A  & CN 102388227 A | 8 |
| A | JP 11-341698 A (Mitsubishi Motors Corp.), 10 December 1999 (10.12.1999), paragraph [0007] (Family: none) | 2-7 |

Form PCT/ISA/210 (continuation of second sheet) (January 2015)

**EP 3 276 738 A1**

## REFERENCES CITED IN THE DESCRIPTION

**Patent documents cited in the description**

- JP 2011241539 A
- JP 2015129870 A